# EUROPÄISCHE PATENTANMELDUNG

(11) **EP 1 520 656 A1**
(43) Veröffentlichungstag der Anmeldung: **06.04.2005**
(21) Anmeldenummer: 03022157.6
(22) Anmeldetag: 30.09.2003
(51) Int. Cl.: B23Q 11/08

(54) **Gliederbahn, insbesondere für Werkzeugmaschinen**

(71) Anmelder: Hennig Holding GmbH, 85551 Kirchheim (DE)
(72) Erfinder: Goellner, Willy, 61103 Rockford/Illinois (US)
(74) Vertreter: Zinnecker, Armin, Dipl.-Ing.

(57) **Zusammenfassung**

Eine Gliederbahn, insbesondere eine Abdeckschürze, zur Abdeckung von Öffnungen, insbesondere von Werkzeugmaschinen oder dergleichen, umfaßt gelenkig miteinander verbundene Glieder (2, 3, 4), die um einen begrenzten Winkel relativ zueinander verschwenkbar sind und die auf einer Seite einen Kupplungsvorsprung (8) und auf der anderen Seite eine entsprechende Kupplungsaufnahme (10) aufweisen. Um eine derartige Gliederbahn zu verbessern weisen die Kupplungsvorsprünge (8) und die Kupplungsaufnahmen (10) jeweils eine Aussparung (15, 16) für einen Stift (17) auf (Fig. 1).

## Beschreibung

Die Erfindung betrifft eine Gliederbahn, insbesondere eine Abdeckschürze, zur Abdeckung von Öffnungen, insbesondere von Werkzeugmaschinen oder dergleichen, nach dem Oberbegriff des Anspruchs 1.

Eine derartige Gliederbahn ist aus der DE 40 33 541 A1 bekannt. Dort ist eine bewegliche Abdeckschürze für Werkzeugmaschinen oder Späne-Transporteinrichtungen offenbart, die aus einer Anzahl von gelenkig miteinander verbundenen Gliedern besteht, die um einen begrenzten Winkel relativ zueinander verschwenkbar sind. Derartige Gliederbahnen werden auch als Gliederschürzen bezeichnet. Die Glieder sind im wesentlichen flach und rechteckig. Sie weisen bei einer der in der DE 40 33 541 A1 gezeigten Ausführungsformen auf einer Seite einen Kupplungsvorsprung und auf der anderen Seite eine entsprechende Kupplungsaufnahme auf. Der Kupplungsvorsprung eines Gliedes liegt in der Kupplungsaufnahme des nächstfolgenden Gliedes. Die Kupplungsvorsprünge sind im wesentlichen zylinderförmig ausgestaltet, wobei die Zylinder einen im wesentlichen kreisförmigen Querschnitt aufweisen, von dem ein Steg zum flachen, rechteckigen Hauptteil des Gliedes führt. Die Kupplungsaufnahmen sind dementsprechend hohlzylinderförmig mit einem dem Kupplungsvorsprung entsprechenden kreisförmigen Querschnitt ausgestaltet. Sie weisen jeweils eine Öffnung auf, deren Begrenzungen Anschläge für den Steg des nächstfolgenden Gliedes bilden und die den Schwenkwinkel der benachbarten Glieder begrenzen.

Die hohlzylinderförmigen Kupplungsaufnahmen erstrecken sich über einen Winkel von mehr als 180°, um eine Verbindung benachbarter Glieder zu gewährleisten. Sie werden dementsprechend seitlich auf den Kupplungsvorsprung des jeweils nächstfolgenden Gliedes geschoben.

Um zu verhindern, daß sich die Glieder der Gliederbahn in seitlicher Richtung relativ zueinander verschieben, sind bei der geschilderten Ausführungsform der DE 40 33 541 A1 flexible Halterungselemente, beispielsweise Drähte, Seile oder Bänder, vorhanden, die durch durchgehende Führungsausnehmungen der Glieder hindurchgeführt sind. Diese Lösung ist allerdings verhältnismäßig aufwendig.

Hiervon ausgehend liegt der Erfindung die Aufgabe zugrunde, eine verbesserte Gliederbahn der eingangs angegebenen Art vorzuschlagen.

Erfindungsgemäß wird diese Aufgabe dadurch gelöst, daß die Kupplungsvorsprünge und die Kupplungsaufnahmen jeweils eine Aussparung für einen Stift aufweisen. Die Kupplungsvorsprünge und die Kupplungsaufnahmen sind dabei derart ausgestaltet, daß ein Stift jeweils die Aussparung einer Kupplungsaufnahme eines Gliedes und die Aussparung des Kupplungsvorsprungs des benachbarten Gliedes durchgreift. Auf diese Weise ist gewährleistet, daß dieser Stift eine seitliche Relativbewegung der beiden aneinandergrenzenden Glieder verhindern kann.

Bei einem Stift in diesem Sinne kann es sich um ein beliebiges stiftförmiges oder anderweitig geformtes Bauteil handeln, das in der beschriebenen Weise die Aussparung in der Kupplungsaufnahme eines Gliedes und die Aussparung in dem Kupplungsvorsprung des nächstfolgenden Gliedes durchgreifen kann.

Vorteilhafte Weiterbildungen sind in den Unteransprüchen beschrieben.

Die Aussparung in der Kupplungsaufnahme ist vorzugsweise als Durchgangsöffnung oder Durchgangsbohrung ausgestaltet.

Vorteilhaft ist es, wenn die Aussparung in der Kupplungsaufnahme ein Gewinde aufweist. In diesem Fall kann der Stift, der ein entsprechendes Außengewinde aufweist, in das Innengewinde der Kupplungsaufnahme eingeschraubt werden.

Nach einer weiteren vorteilhaften Weiterbildung weist die Aussparung in der Kupplungsaufnahme eine Vertiefung, insbesondere eine Ansenkung auf. Der Stift kann dann einen entsprechenden Senkkopf aufweisen. Hierdurch kann insbesondere erreicht werden, daß der Kopf des Stiftes nicht über die Oberfläche des Gliedes hinausragt. Er kann im wesentlichen bündig mit dieser Oberfläche abschließen bzw. fluchten.

Eine weitere vorteilhafte Weiterbildung ist dadurch gekennzeichnet, daß sich die Aussparung des Kupplungsvorsprungs über einen vorgegebenen Winkelbereich erstreckt. Dieser Winkelbereich ist vorzugsweise dem Winkel angepaßt, um den die gelenkig miteinander verbundenen Glieder jeweils relativ zueinander verschwenkbar sind. Vorteilhaft ist es, wenn der Winkelbereich, über den sich die Aussparung des Kupplungsvorsprungs erstreckt, etwas größer ist als der Winkel, um den die gelenkig miteinander verbundenen Glieder jeweils relativ zueinander verschwenkbar sind, so daß die Anschläge benachbarter Glieder durch den Steg des zylinderförmigen Kupplungsvorsprungs und die Begrenzungen der Öffnungen der hohlzylinderförmigen Kupplungsaufnahme gebildet werden.

Die Erfindung betrifft ferner ein Glied für eine Gliederbahn, insbesondere eine Abdeckschürze, zur Abdeckung von Öffnungen, insbesondere von Werkzeugmaschinen oder dergleichen, mit einem Kupplungsvorsprung auf einer Seite und einer entsprechenden Kupplungsaufnahme auf der anderen Seite, welches erfindungsgemäß dadurch gekennzeichnet ist, daß der Kupplungsvorsprung und die Kupplungsaufnahme jeweils eine Aussparung für einen Stift aufweisen. Dieses Glied kann die bereits erläuterten vorteilhaften Weiterbildungen aufweisen.

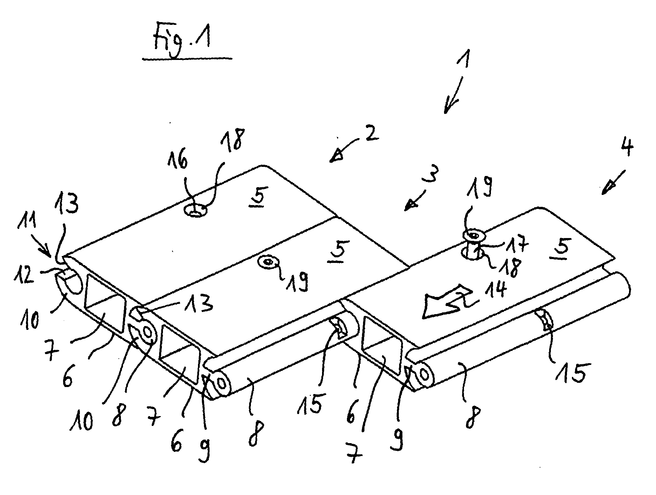

Ein Ausführungsbeispiel der Erfindung wird nachstehend anhand der beigefügten Zeichnung im einzelnen erläutert. In der Zeichnung zeigt
- Fig. 1: drei Glieder einer Abdeckschürze für eine Werkzeugmaschine in einer perspektivischen Darstellung,

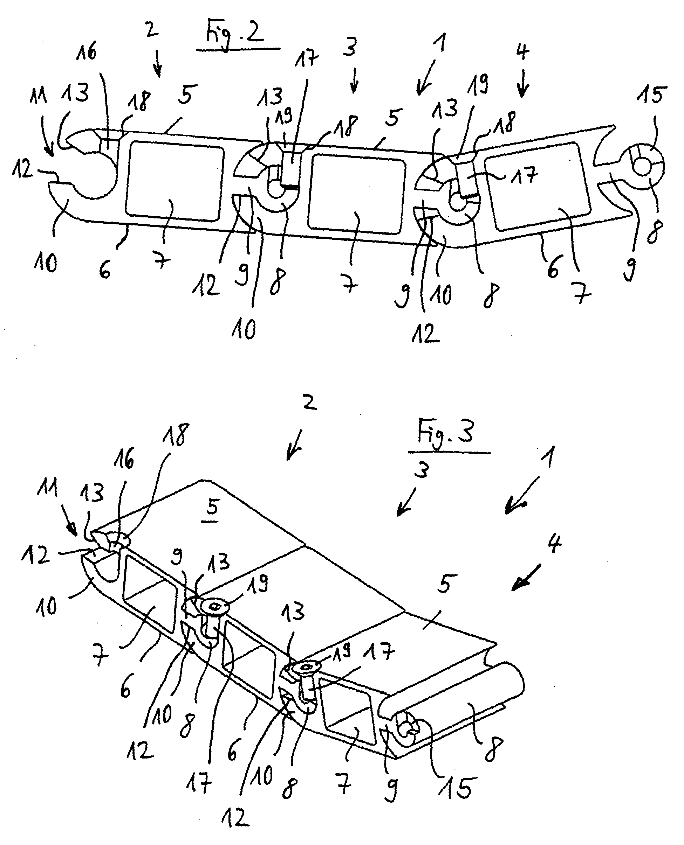

- Fig. 2: einen Querschnitt durch die Abdeckschürze gemäß Fig. 1 in einer Seitenansicht und
- Fig. 3: den Querschnitt gemäß Fig. 2 in einer perspektivischen Ansicht.

Von der insgesamt mit 1 bezeichneten Abdeckschürze für eine Werkzeugmaschine sind in der Zeichnung jeweils drei Glieder 2, 3, 4 dargestellt. Die Glieder 2 - 4 sind im wesentlichen rechteckig. Sie weisen jeweils eine im wesentlichen ebene Oberseite 5 und eine ebenfalls im wesentlichen ebene Unterseite 6 auf, zwischen welchen sich ein langgestreckter, im Profil im wesentlichen rechteckiger Hohlraum 7 befindet.

Die Glieder 2, 3, 4 sind gelenkig miteinander verbunden, wobei jeweils eine gelenkige Verbindung zwischen benachbarten Gliedern 2, 3 und 3, 4 besteht. Auf einer Seite jedes Gliedes 2 - 4 ist jeweils ein Kupplungsvorsprung 8 vorhanden, der im wesentlichen zylinderförmig ausgestaltet ist. Jeder Kupplungsvorsprung 8, der einen im wesentlichen kreisförmigen Querschnitt aufweist, ist durch einen Steg 9 mit dem zugehörigen Glied 2 - 4 verbunden.

Auf der anderen Seite jedes Gliedes 2 - 4 ist jeweils eine entsprechende Kupplungsaufnahme 10 vorhanden, die im wesentlichen hohlzylinderförmig ausgestaltet ist, wobei der Innendurchmesser des Hohlzylinders im wesentlichen dem Außendurchmesser des zylinderförmigen Kupplungsvorsprungs 8 entspricht bzw. geringfügig größer ist, um eine einwandfreie Schwenkbewegung zu ermöglichen. Die Kupplungsaufnahme 10 umfaßt eine Öffnung 11, deren Begrenzungsflächen 12, 13 Anschläge für den Steg 9 des benachbarten Gliedes bilden. In dieser Weise sind jeweils zwei benachbarte Glieder 2, 3 und 3, 4 um einen begrenzten Winkel relativ zueinander verschwenkbar, wobei die Grenzen des Verschwenkwinkels durch den Anschlag der Begrenzung 12 an die untere Endfläche des Steges 9 und durch den Anschlag der Begrenzung 13 auf die obere Endfläche des Steges 9 gebildet werden.

Die Glieder werden durch seitliches Verschieben miteinander verbunden, beispielsweise durch Verschieben des Gliedes 4 in Richtung des Pfeils 14. Um nach der Montage ein erneutes seitliches Verschieben zu verhindern sind in den Kupplungsvorsprüngen 8 und den Kupplungsaufnahmen 10 Aussparungen 15, 16 vorhanden, die von einem Stift 17 durchgriffen werden können.

Die Aussparung 16 in der Kupplungsaufnahme10 ist als Durchgangsbohrung ausgestaltet, die an ihrem der Oberseite 5 der Glieder 2 - 4 zugewandten Ende eine Ansenkung 18 aufweist. Im Bereich der Durchgangsbohrung der Aussparung 16 ist ferner ein Innengewinde (in der Zeichnung nicht dargestellt) vorhanden, in das der Stift 17 mit einem Außengewinde (in der Zeichnung ebenfalls nicht dargestellt) eingeschraubt werden kann, bis der Senkkopf 19 des Stiftes 17 in der Ansenkung 18 liegt. Der Senkkopf 19 ist an seiner oberen Seite eben ausgestaltet, wobei die ebene Oberseite im montierten Zustand mit der Ebene der Oberseite 5 des Gliedes 2 - 4 fluchtet. In der Mitte des Senkkopfes 19 befindet sich eine Innensechskant-Vertiefung, an der ein Innensechskant-Schlüssel angreifen kann.

Die Aussparung 15 in dem Kupplungsvorsprung 8 erstreckt sich über einen vorgegebenen Winkelbereich. Die Größe dieses Winkelbereichs und dessen Lage sind derart gewählt, daß die Anschläge für die Verschwenkung eines Gliedes um das benachbarte Glied von den Begrenzungen 12, 13 der Öffnungen 11 in den Kupplungsaufnahmen 10 gebildet werden. Der Winkelbereich, über den sich die Aussparung 15 des Kupplungsvorsprungs 8 erstreckt, ist also größer als der Winkel, der von den Begrenzungen 12, 13 gebildet wird. Die Aussparung 15 kann durch einen Fingerfräser hergestellt werden, der bei der Herstellung der Aussparung 15 über einen vorgegebenen Winkelbereich verschwenkt wird.

Der Stift 17 kann auch auf andere Weise in der Aussparung 16 befestigbar sein.

## Patentansprüche

1. Gliederbahn, insbesondere Abdeckschürze, zur Abdeckung von Öffnungen, insbesondere von Werkzeugmaschinen oder dergleichen, mit gelenkig miteinander verbundenen Gliedern (2, 3, 4), die um einen begrenzten Winkel relativ zueinander verschwenkbar sind und die auf einer Seite einen Kupplungsvorsprung (8) und auf der anderen Seite eine entsprechende Kupplungsaufnahme (10) aufweisen,
**dadurch gekennzeichnet,**
**daß** die Kupplungsvorsprünge (8) und die Kupplungsaufnahmen (10) jeweils eine Aussparung (15, 16) für einen Stift (17) aufweisen.

2. Gliederbahn nach Anspruch 1, **dadurch gekennzeichnet, daß** die Aussparung (16) in der Kupplungsaufnahme (10) als Durchgangsöffnung ausgestaltet ist.

3. Gliederbahn nach Anspruch 1 oder 2, **dadurch gekennzeichnet, daß** die Aussparung (16) in der Kupplungsaufnahme (10) ein Gewinde aufweist.

4. Gliederbahn nach einem der vorhergehenden Ansprüche, **dadurch gekennzeichnet, daß** die Aussparung (16) in der Kupplungsaufnahme (10) eine Vertiefung, insbesondere eine Ansenkung (18) aufweist.

5. Gliederbahn nach einem der vorhergehenden Ansprüche, **dadurch gekennzeichnet, daß** sich die Aussparung (15) in dem Kupplungsvorsprung (8) über einen vorgegebenen Winkelbereich erstreckt.

6. Glied für eine Gliederbahn, insbesondere eine Abdeckschürze, zur Abdeckung von Öffnungen, insbesondere von Werkzeugmaschinen oder dergleichen, mit einem Kupplungsvorsprung (8) auf einer Seite und einer entsprechenden Kupplungsaufnahme (10) auf der anderen Seite,
**dadurch gekennzeichnet,**
**daß** der Kupplungsvorsprung (8) und die Kupplungsaufnahme (10) jeweils eine Aussparung (15, 16) für einen Stift (17) aufweisen.

7. Glied nach Anspruch 6, **gekennzeichnet durch** das oder die Merkmale eines oder mehrerer der Ansprüche 2 bis 5.
